# EUROPÄISCHE PATENTSCHRIFT

(11) **EP 3 155 675 B1**
(45) Veröffentlichungstag und Bekanntmachung des Hinweises auf die Patenterteilung: **31.07.2019**
(21) Anmeldenummer: 15723842.9
(22) Anmeldetag: 19.05.2015
(51) Int. Cl.: H01M 2/16, H01M 4/62, H01M 10/0525, H01M 4/66

(54) **ELEKTROCHEMISCHER ENERGIESPEICHER UND BATTERIE**
ELECTROCHEMICAL ENERGY STORAGE DEVICE AND BATTERY
ACCUMULATEUR D'ÉNERGIE ÉLECTROCHIMIQUE ET BATTERIE

(30) Priorität: 12.06.2014 DE 102014008740
(43) Veröffentlichungstag der Anmeldung: 19.04.2017
(73) Patentinhaber: Daimler AG, 70327 Stuttgart (DE)
(72) Erfinder: HINTENNACH, Andreas, 71732 Tamm (DE)
(74) Vertreter: JENSEN & SON
(86) Internationale Anmeldenummer: PCT/EP2015/001020
(87) Internationale Veröffentlichungsnummer: WO 2015/188914

(56) Entgegenhaltungen:
- WO-A1-2004/021477
- WO-A1-2009/033015
- WO-A1-2012/139742
- WO-A2-03/021697
- US-A1- 2012 315 539

## Beschreibung

Die Erfindung betrifft einen elektrochemischen Energiespeicher gemäß dem Oberbegriff des Anspruchs 1. Weiterhin betrifft die Erfindung eine Batterie.

Aus der DE 10 2010 018 731 A1 ist eine Lithium-Schwefel-Batterie bekannt, umfassend eine erste Elektrode umfassend Lithium, eine zweite Elektrode umfassend Schwefel und/oder ein Lithiumsulfid, einen Separator zwischen den Elektroden und einen Elektrolyten im Separator. Dabei umfasst der Separator ein nicht-verwebtes Vlies aus Polymerfasern.

Weiterhin ist aus der US 2011/0281156 A1 eine Elektrode für eine Batterie bekannt, die mit Kohlenstoffnanoröhren versehen ist, wobei die Kohlenstoffnanoröhren eine Silikonmatrix aufweisen, mittels der volumetrische Änderungen der Batterie während elektrochemischer Prozesse innerhalb der Batterie kompensierbar sind.

Ferner sind aus der WO 03/021697 A2, der WO 2004/021477 A1 und der WO 2012/139742 A1 elektrische Separatoren für Batterien bekannt.

Der Erfindung liegt die Aufgabe zu Grunde, ein gegenüber dem Stand der Technik verbesserten elektrochemischen Energiespeicher sowie eine verbesserte Batterie anzugeben.

Hinsichtlich des elektrochemischen Energiespeichers wird die Aufgabe erfindungsgemäß mit den in Anspruch 1 angegebenen Merkmalen und hinsichtlich der Batterie mit den in Anspruch 6 angegebenen Merkmalen gelöst.

Vorteilhafte Ausgestaltungen der Erfindung sind Gegenstand der Unteransprüche.

Ein elektrochemischer Energiespeicher umfasst zumindest zwei Elektroden, zwischen denen ein Separator angeordnet ist. Erfindungsgemäß ist vorgesehen, dass der Separator mechanisch flexibel ausgebildet ist.

Die Elektroden sind als eine Anode und eine Kathode ausgebildet, wobei der Separator die Elektroden räumlich und elektrisch voneinander trennt. Dabei ist der Separator zweckmäßigerweise ionendurchlässig ausgebildet, so dass das Aktivmaterial der Anode, z. B. Lithium-Ionen, bei einem Entladevorgang des elektrochemischen Energiespeichers zur Kathode und beim Ladevorgang zurück zur Anode diffundieren kann. Diese elektrochemischen Prozesse führen zu volumetrischen Änderungen der Elektroden, was auch als "Atmen" der Elektrode bezeichnet wird. Die mechanisch flexible Ausbildung des Separators ermöglicht es, die volumetrischen Änderungen der Elektroden zu kompensieren, so dass dieser mit entsprechend gegenüber dem Stand der Technik kleineren Dimensionen gestaltbar ist, da kein zusätzlicher Bauraum bei der Anordnung des elektrochemischen Energiespeichers zur Kompensation der volumetrischen Änderungen vorgehalten werden muss. Zudem kann eine gleichmäßig hohe Verpressung von Einzelzellen innerhalb des elektrochemischen Energiespeichers erfolgen.

Die mechanisch flexible Ausbildung des Separators ermöglicht eine passive Positionsänderung des Separators zwischen den Elektroden in Abhängigkeit zwischen den zumindest zwei Elektroden erfolgenden elektrochemischen Prozessen. Der Separator wird dann z. B. bei Vergrößerung eines kathodischen Volumens in Richtung der Anode verschoben, deren Volumen sich dabei verkleinert.

Alternativ oder zusätzlich ist der Separator elastisch ausgebildet, wobei dieser seine Form und/oder sein Volumen in Abhängigkeit zwischen den Elektroden erfolgender elektrochemischer Prozesse verändern kann. Die Form- und/oder Volumenänderung des Separators erfolgt dabei im Wesentlichen passiv in Abhängigkeit der volumetrischen Änderungen der Elektroden, wobei eine Position des Separators veränderbar ist oder fest bleibt. D.h. beispielsweise, wenn sich das Volumen der Kathode aufgrund eines Entladens des elektrochemischen Speichers vergrößert, wird der Separator mit seiner der Kathode zugewandten Seite entsprechend in Richtung der Anode deformiert. Die Kathode kann sich somit innerhalb des elektrochemischen Energiespeichers ausdehnen, ohne dass äußere Deformierungen der Einzelzelle oder des elektrochemischen Energiespeichers auftreten. Der Separator kann dabei mit nur geringem Volumenverlust in Richtung der Anode deformiert werden, wobei sich die der Anode zugewandte Seite des Separators im Anodenbereich z. B. auswölbend ausbreitet, oder das Volumen des Separators wird auf der Kathodenseite derart komprimiert, dass auf der Anodenseite keine oder nur eine geringe auswölbende Ausbreitung des Separators erfolgt. Dabei muss allerdings darauf geachtet werden, dass ein lonenaustausch zwischen den Elektroden weiterhin sichergestellt ist.

Gemäß einem bevorzugten Ausführungsbeispiel ist der Separator aus einer Glasfasermembran gebildet. Die Glasfasermembran weist eine entsprechende Porosität auf, in die gemäß einem weiteren bevorzugten Ausführungsbeispiel ein flüssiger, organischer Elektrolyt einfüllbar ist, mittels dessen das Aktivmaterial der Anode durch den Separator transportiert werden kann. Alternativ kann der Separator auch aus einer porösen Keramikfolie oder einer porösen Polymermembran gebildet sein.

Die Elektroden des elektrochemischen Energiespeichers sind jeweils aus einem Substrat gebildet und mit einem Verbundmaterial, umfassend eine elektrisch leitfähige Matrix und ein Aktivmaterial, welches in die elektrisch leitfähige Matrix in definierter Art und Weise eingebunden ist, beschichtet.

Die elektrisch leitfähige Matrix ist beispielsweise aus einer porösen und mechanisch flexiblen Kohlenstoffstruktur, wie z. B. Graphit oder Ruß, gebildet. Die mechanische Flexibilität der Kohlenstoffstruktur ermöglicht die zuvor genannten volumetrischen Änderungen der Elektroden, insbesondere des Aktivmaterials, möglichst beschädigungsfrei und ohne Verlust der elektrischen Kontaktierung der Elektroden aufzunehmen. Damit kann die Kompensierung der volumetrischen Änderungen des Aktivmaterials in den Elektroden weiter verbessert werden.

Die elektrisch leitfähige Matrix zumindest einer der Elektroden, insbesondere der Anode, umfasst zusätzlich oder alternativ eine Siliziumstruktur. Silizium weist verglichen mit der Kohlenstoffstruktur eine verringerte elektrische Leitfähigkeit auf, besitzt aber die Eigenschaft, eine höhere Menge an Aktivmaterial, insbesondere an Metall-Ionen wie z. B. Lithium-Ionen, zu interkalieren und eignet sich somit besonders gut zur Beschichtung der Anode.

Besonders bevorzugt umfasst die Siliziumstruktur nanoskalige, röhrenförmige Strukturen, so dass eine mechanische Flexibilität der elektrisch leitfähigen Matrix in Kombination mit der mechanisch flexiblen Kohlenstoffstruktur gesteigert werden kann. Dadurch kann eine Leistungsfähigkeit und eine Lebensdauer des elektrochemischen Speichers gegenüber dem Stand der Technik erheblich verbessert werden.

Darüber hinaus betrifft die Erfindung eine Batterie, umfassend mindestens einen elektrochemischen Energiespeicher, mittels dessen eine Leistungsfähigkeit und eine Lebensdauer der Batterie gegenüber dem Stand der Technik erhöht werden kann.

Ausführungsbeispiele der Erfindung werden im Folgenden anhand von Zeichnungen näher erläutert.

Dabei zeigen:
- Fig. 1: schematisch eine Einzelzelle einer Batterie in Explosionsdarstellung,
- Fig. 2A: schematisch eine Schnittdarstellung einer Elektrodenanordnung einer Einzelzelle gemäß dem Stand der Technik im geladenen Zustand,
- Fig. 2B: schematisch eine Schnittdarstellung der Elektrodenanordnung der Einzelzelle gemäß dem Stand der Technik im geladenen Zustand,
- Fig. 3A: schematisch eine Schnittdarstellung einer erfindungsgemäßen Elektrodenanordnung einer Einzelzelle im geladenen Zustand und
- Fig. 3B: schematisch eine Schnittdarstellung der erfindungsgemäßen Elektrodenanordnung im geladenen Zustand.

Einander entsprechende Teile sind in allen Figuren mit den gleichen Bezugszeichen versehen.

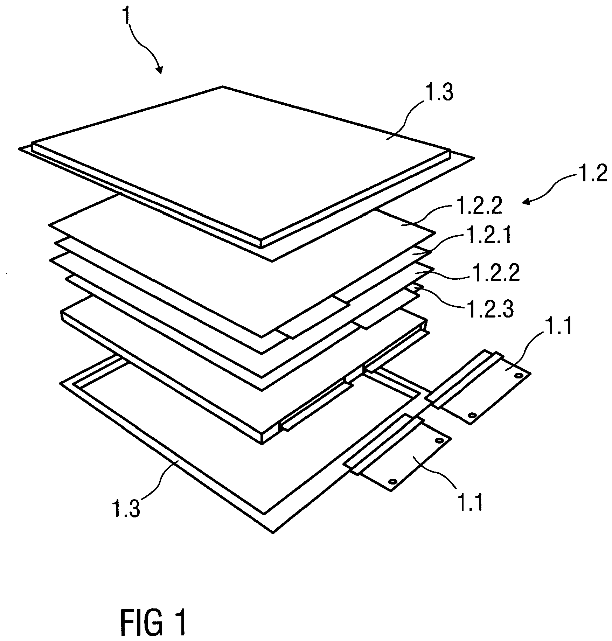

In Figur 1 ist eine Einzelzelle 1 für eine nicht näher dargestellte Batterie gezeigt. Bei der Batterie handelt es sich insbesondere um eine aufladbare Batterie, z. B. eine Lithium-Schwefel-Batterie. Die Einzelzelle 1 stellt hierbei einen elektrochemischen Energiespeicher dar.

Bei der Einzelzelle 1 handelt es sich um eine sogenannten Pouch- oder Coffee-Bag-Zelle, wobei zur Bildung der Batterie eine Anzahl solcher Einzelzellen 1 elektrisch seriell und/oder parallel miteinander verschaltet ist und wobei die Verschaltung über blechförmige Ableiter 1.1 als elektrische Anschlüsse der Einzelzelle 1 erfolgt.

Eine solche Einzelzelle 1 ist als ein flaches, weitestgehend rechteckförmiges Speicherelement für Elektroenergie ausgeführt, welches eine Elektrodenfolienanordnung 1.2 aus Lagen mehrerer abwechselnd gestapelter, folienartiger Anoden 1.2.1, Separatoren 1.2.2 und Kathoden 1.2.3 umfasst, die von einer aus zwei schalenartig geformten Folienabschnitten gebildeten folienartigen Hülle 1.3 umgeben ist.

Die Anode 1.2.1 ist hierbei als eine negative Elektrode und die Kathode 1.2.3 als eine positive Elektrode ausgebildet. Die Anode 1.2.1 und die Kathode 1.2.3 werden im Folgenden auch als Elektroden zusammengefasst bezeichnet.

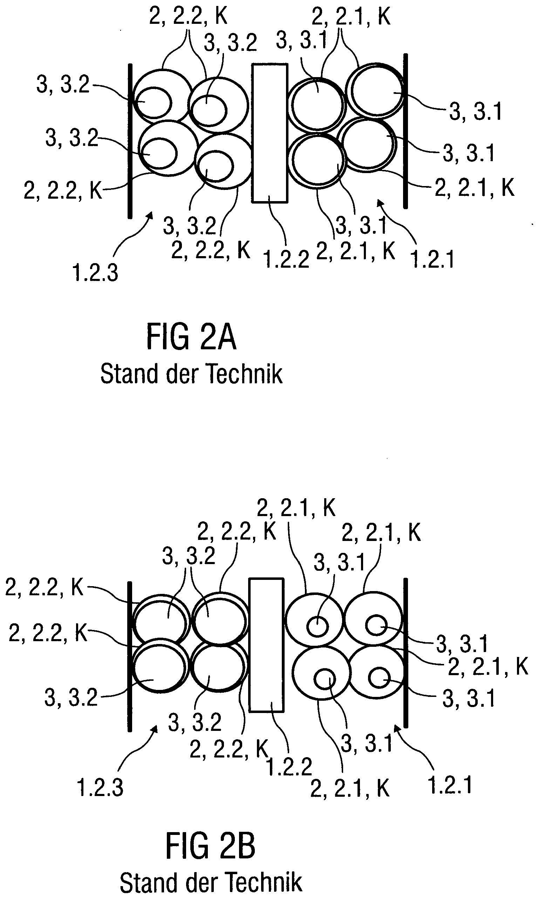

Die Elektroden der Einzelzelle 1 sind jeweils aus einem Substrat gebildet und mit einer elektrisch leitfähigen Matrix 2, in die ein Aktivmaterial 3 in definierter Art und Weise eingebunden ist, beschichtet, wie es in den nachfolgenden Figuren 2A bis 3B gezeigt ist.

Die Figuren 2A und 2B zeigen jeweils eine Schnittdarstellung eines Ausschnitts aus einer Einzelzelle 1 mit einer Anode 1.2.1, einer Kathode 1.2.3 und einem Separator 1.2.2 gemäß dem Stand der Technik. Die Einzelzelle 1 ist dabei in Figur 2A in einem geladenen Zustand und in Figur 2B in einem entladenen Zustand gezeigt.

Im geladenen Zustand ist ein anodisches Aktivmaterial 3.1 in einer anodischen, elektrisch leitfähigen Matrix 2.1 interkaliert. Ein kathodisches Aktivmaterial 3.2 ist in einer kathodischen, elektrisch leitfähigen Matrix 2.2 eingebettet. Ist die Batterie als eine Lithium-Schwefel-Batterie ausgebildet, so umfasst das anodische Aktivmaterial 3.1 Lithium-Ionen. Bei einer Natrium-Schwefel-Batterie umfasst das anodische Aktivmaterial 3.1 Natrium-Ionen. Das kathodische Aktivmaterial 3.2 ist hierbei jeweils Schwefel. Die kathodische, elektrisch leitfähige Matrix 2.2 ist aus einer elektrisch leitenden Kohlenstoffstruktur K, wie z. B. Graphit oder Ruß, gebildet. Die anodische, elektrisch leitfähige Matrix 2.1 ist aus einer elektrisch leitfähigen Kohlenstoffstruktur K und einer Siliziumstruktur S gebildet.

Im entladenen Zustand ist das anodische Aktivmaterial 3.1 an das kathodische Aktivmaterial 3.2 gebunden und gemeinsam mit diesem in der kathodischen, elektrisch leitfähigen Matrix 2.2 interkaliert. Im entladenen Zustand bilden das kathodische Aktivmaterial 3.2 und das anodische Aktivmaterial 3.1 somit ein vergrößertes Volumen innerhalb der kathodischen, elektrisch leitfähigen Matrix 2.2. Die Einzelzelle 1 muss somit entsprechende Dimensionen aufweisen, um die volumetrischen Änderungen der Aktivmaterialien 3.1, 3.2 zu kompensieren. Dazu weisen die Kohlenstoffstrukturen K und die Siliziumstrukturen S entsprechend große Hohlräume oder Poren auf, in denen sich die Aktivmaterialien 3.1, 3.2 ausdehnen können.

Nachfolgend werden die elektrochemischen Prozesse anhand einer Lithium-Schwefel-Batterie kurz erläutert:
Beim Entladen der Batterie wird Lithium in Lithium-Ionen und Elektronen oxidiert. Die Lithium-Ionen wandern durch den Separator 1.2.2 zur Kathode 1.2.3, während gleichzeitig die Elektronen über einen äußeren Stromkreis von der Anode 1.2.1 zur Kathode 1.2.3 übertragen werden, wobei zwischen der Kathode 1.2.3 und der Anode 1.2.1 ein Energieverbraucher zwischengeschaltet sein kann, welcher durch den Elektronenstrom mit Energie versorgt wird. An der Kathode 1.2.3 werden die Lithium-Ionen durch eine Reduktionsreaktion aufgenommen, wobei der Schwefel zu Lithiumsulfid reduziert wird.

Die elektrochemische Reaktion beim Entladen einer Batterie ist allgemein bekannt und kann am Beispiel der Lithium-Schwefel-Batterie wie folgt beschrieben werden:

Anode 1.2.1: Li → Li⁺ + e⁻;

Kathode 1.2.3: S₈ + 2Li⁺ + e⁻ → Li₂S₈ → Li₂S₆ → Li₂S₄ → Li₂S₂ → Li₂S

Beim Laden der Batterie wird an die Elektroden eine Energiequelle angeschlossen. Dabei wird das Lithium aus dem Lithiumsulfid zu Lithium-Kationen und Elektronen oxidiert, wobei die Lithium-Kationen über den Separator 1.2.2 und die Elektronen über den äußeren Stromkreis zurück zur Anode 1.2.1 wandern.

Beim Entladen der Batterie können zusätzlich Polysulfide entstehen, welche beim Ladevorgang möglicherweise nicht vollständig zu elementaren Schwefel umgewandelt werden. Diese Polysulfide können aufgrund der festen Porengröße aus der Kathode 1.2.3 heraus über den Separator 1.2.2 zur Anode 1.2.1 wandern und dort eine Lithiumsulfid-Schicht bilden, die eine Kapazität und damit eine Lebensdauer der Batterie erheblich verringern. Zudem wird das kathodische Aktivmaterial 3.2 sukzessive abgebaut.

Weiterhin können aufgrund der festen Porengrößen der elektrisch leitfähigen Matrizen 2.1, 2.2 elektrische Kontaktierungen der Elektroden verloren gehen, so dass eine Leistungsfähigkeit der Batterie herabgesetzt ist.

Zur Lösung des Problems sieht die Erfindung vor, den Separator 1.2.2 mechanisch flexibel auszubilden. Zudem sind die Kohlenstoffstruktur K und die Siliziumstruktur S mechanisch flexibel ausgebildet, wobei die Siliziumstruktur S dazu nanoskalige, röhrenförmige Strukturen aus Silizium umfasst.

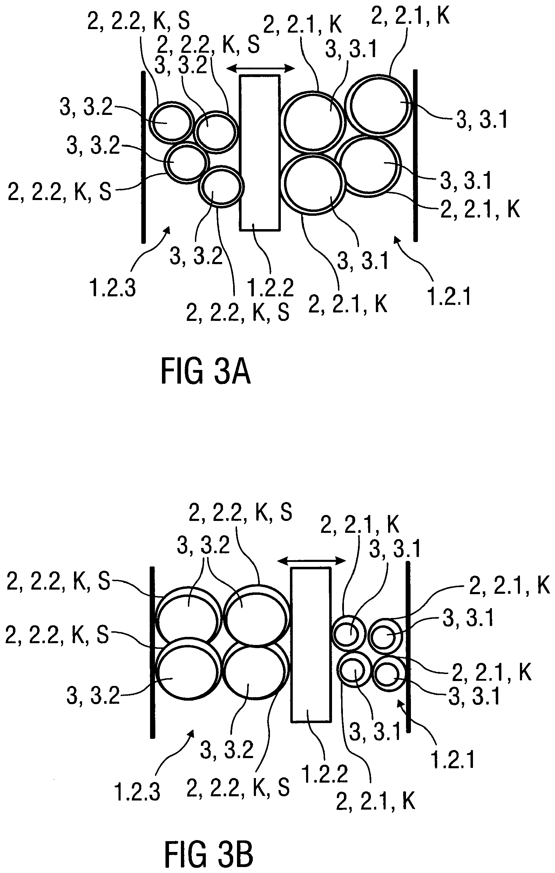

Die erfindungsgemäße Ausgestaltung des elektrochemischen Energiespeichers wird in den nachfolgenden Figuren 3A und 3B näher beschrieben.

Dazu zeigen die Figuren 3A und 3B jeweils eine Schnittdarstellung eines Ausschnitts aus einer Einzelzelle 1 mit einer Anode 1.2.1, einer Kathode 1.2.3 und einem Separator 1.2.2 im Sinne der Erfindung. Die Einzelzelle 1 ist dabei in Figur 3A in einem geladenen Zustand und in Figur 2B in einem entladenen Zustand gezeigt.

Im geladenen Zustand der Einzelzelle 1 ist hierbei eine volumetrische Ausdehnung der kathodischen, elektrisch leitfähigen Matrix 2.2 gegenüber dem in Figur 2A gezeigten Ausführungsbeispiel verringert. Durch die mechanisch flexible Ausbildung der Kohlenstoffstruktur K passt sich diese an das von dem kathodischen Aktivmaterial 3.2 vorgegebene Volumen an. Die volumetrische Ausdehnung der anodischen, elektrisch leitfähigen Matrix 2.1 korrespondiert dabei mit der volumetrischen Ausdehnung der anodischen, elektrisch leitfähigen Matrix 2.1 gemäß dem in Figur 2A gezeigten Ausführungsbeispiel.

Im entladenen Zustand der Einzelzelle 1 ist das kathodische Aktivmaterial 3.2 beispielsweise zu Lithiumsulfid reduziert und vergrößert sein Volumen dadurch entsprechend dem gezeigten Ausführungsbeispiel in Figur 3B. Das Volumen der kathodischen, elektrisch leitfähigen Matrix 2.2 hat sich dabei gegenüber dem in Figur 3A gezeigten geladenen Zustand der Einzelzelle 1 korrespondierend mit dem vergrößerten Volumen des kathodischen Aktivmaterials 3.2 vergrößert. Da in der Anode 1.2.1 im entladenen Zustand der Einzelzelle 1 weniger anodisches Aktivmaterial 3.1, beispielsweise Lithium-Ionen, vorhanden ist, passt sich die anodische, elektrisch leitfähige Matrix 2.1 mit ihrem Volumen an das Volumen des anodischen Aktivmaterials 3.1 an. D. h. die Kohlenstoffstruktur K und die Siliziumstruktur S können ihr Volumen an das Volumen des in ihnen eingebetteten Aktivmaterials 3.1, 3.2 anpassen.

Dabei ist auch eine Porengröße der Kohlenstoffstruktur K derart variierbar, dass das kathodische Aktivmaterial 3.2 in der Kohlenstoffstruktur K irreversibel adsorbiert ist, so dass ein Abbau des kathodischen Aktivmaterials 3.2 verhindert oder zumindest verringert werden kann.

Der Separator 1.2.2 ist im gezeigten Ausführungsbeispiel der Figur 3A, d. h. im geladenen Zustand der Einzelzelle 1, gegenüber dem in Figur 2A gezeigten Ausführungsbeispiel in Richtung der Anode 1.2.1 verschoben, so dass ein Anodenraum gegenüber einem Kathodenraum verkleinert ist. Da die volumetrische Ausdehnung des anodischen Aktivmaterials 3.1 im geladenen Zustand gegenüber der volumetrischen Ausdehnung des kathodischen Aktivmaterials 3.2 vergrößert ist, wird der Separator 1.2.2 aufgrund seiner mechanisch flexiblen Ausbildung passiv in Richtung der Anode 1.2.1 verschoben.

Im gezeigten Ausführungsbeispiel der Figur 3B, d. h. im entladenen Zustand der Einzelzelle 1, ist der Separator 1.2.2 gegenüber dem geladenen Zustand in Richtung der Kathode 1.2.3 verschoben, so dass der Kathodenraum gegenüber dem Anodenraum verkleinert ist.

Zusätzlich ist es auch möglich, ein Volumen des Separators 1.2.2 zu komprimieren, wenn sich die Aktivmaterialien 3.1, 3.2 der Elektroden ausdehnen. Dabei muss allerdings darauf geachtet werden, dass sich das Volumen des Separators 1.2.2 nur soweit komprimieren lässt, dass ein lonenaustausch zwischen den Elektroden weiterhin möglich ist.

Der Separator 1.2.2 kann dazu aus einer porösen Glasfasermembran, einer porösen Keramikfolie oder aus einer porösen Polymermembran gebildet sein.

Durch die passive Positionsänderung des Separators 1.2.2 können die volumetrischen Änderungen der Aktivmaterialien 3.1, 3.2 kompensiert werden, so dass die Abmessungen der Einzelzelle 1 gegenüber dem Stand der Technik verringerbar sind, wodurch weniger Bauraum benötigt wird. Auch die zusätzliche mechanische Flexibilität der elektrisch leitfähigen Matrizen 2.1, 2.2 ermöglicht eine weitere Kompensation der volumetrischen Änderungen der Aktivmaterialien 3.1, 3.2, so dass eine mechanische Beanspruchung der Elektroden weitestgehend gering gehalten wird. Der hier vorgestellte elektrochemische Energiespeicher zeichnet sich somit durch eine hohe Leistungsfähigkeit bei einer hohen Lebensdauer aus.

## Patentansprüche

1. Elektrochemischer Energiespeicher, umfassend zumindest zwei Elektroden, zwischen denen ein Separator (1.2.2) angeordnet ist, wobei der Separator (1.2.2) mechanisch flexibel ausgebildet ist
wobei eine Position des Separators (1.2.2) zwischen den Elektroden in Abhängigkeit von zwischen den Elektroden erfolgender elektrochemischer Prozesse veränderbar ist, **dadurch gekennzeichnet, dass** die Elektroden jeweils eine Beschichtung aus einem Verbundmaterial umfassen, wobei das Verbundmaterial eine elektrisch leitfähige Matrix (2) und ein Aktivmaterial (3) umfasst, wobei die elektrisch leitfähige Matrix (2) zumindest einer der Elektroden eine Siliziumstruktur (S) umfasst.

2. Elektrochemischer Energiespeicher nach Anspruch 1,
**dadurch gekennzeichnet, dass** der Separator (1.2.2) elastisch ausgebildet ist, wobei eine Form und/oder ein Volumen des Separators (1.2.2) in Abhängigkeit von zwischen den Elektroden erfolgender elektrochemischer Prozesse veränderbar ist bzw. sind.

3. Elektrochemischer Energiespeicher nach einem der vorhergehenden Ansprüche,
**dadurch gekennzeichnet, dass** der Separator (1.2.2) aus einer Glasfasermembran gebildet ist.

4. Elektrochemischer Energiespeicher nach einem der vorhergehenden Ansprüche,
**dadurch gekennzeichnet, dass** in dem Separator (1.2.2) ein Elektrolyt angeordnet ist.

5. Elektrochemischer Energiespeicher nach einem der vorhergehenden Ansprüche,
**dadurch gekennzeichnet, dass** die elektrisch leitfähige Matrix (2) eine poröse und mechanisch flexible Kohlenstoffstruktur (K) umfasst.

6. Elektrochemischer Energiespeicher nach einem der vorhergehenden Ansprüche,
**dadurch gekennzeichnet, dass** die Siliziumstruktur (S) nanoskalige, röhrenförmige Strukturen aus Silizium umfasst.

7. Batterie, umfassend mindestens einen elektrochemischen Energiespeicher gemäß einem der Ansprüche 1 bis 6.

## Claims

1. Electrochemical energy storage device, comprising at least two electrodes between which a separator (1.2.2) is arranged, the separator (1.2.2) being mechanically flexible,
wherein a position of the separator (1.2.2) between the electrodes can be changed as a function of electrochemical processes occurring between the electrodes, **characterised in that** each of the electrodes comprises a coating of a composite material, the composite material comprising an electrically conductive matrix (2) and an active material (3), the electrically conductive matrix (2) of at least one of the electrodes comprising a silicon structure (S).

2. Electrochemical energy storage device according to claim 1, **characterised in that** the separator (1.2.2) is designed to be elastic, wherein a shape and/or a volume of the separator (1.2.2) can be changed as a function of electrochemical processes occurring between the electrodes.

3. Electrochemical energy storage device according to any of the preceding claims, **characterised in that** the separator (1.2.2) is formed from a glass fibre membrane.

4. Electrochemical energy storage device according to any of the preceding claims, **characterised in that** an electrolyte is located in the separator (1.2.2).

5. Electrochemical energy storage device according to any of the preceding claims, **characterised in that** the electrically conductive matrix (2) comprises a porous and mechanically flexible carbon structure (K).

6. Electrochemical energy storage device according to any of the preceding claims, **characterised in that** the silicon structure (S) comprises nanoscale tubular structures of silicon.

7. Battery comprising an electrochemical energy storage device according to any of claims 1 to 6.

## Revendications

1. Réservoir d'énergie électrochimique, comprenant au moins deux électrodes, entre lesquelles est disposé un séparateur (1.2.2), le séparateur (1.2.2) étant mécaniquement souple ;
Une position du séparateur (1.2.2) étant modifiable entre les électrodes en fonction des processus électrochimiques effectués entre les électrodes, **caractérisé en ce que** les électrodes, comprennent respectivement une couche constituée d'un matériau composite, le matériau composite comprenant une matrice électroconductrice (2) et un matériau actif (3), la matrice électroconductrice (2) comprenant au moins l'une des électrodes.

2. Réservoir d'énergie électrochimique selon la revendication 1, **caractérisé en ce que** le séparateur (1.2.2) est élastique, une forme et/ou un volume du séparateur (1.2.2) étant modifiable(s) en fonction des processus électrochimiques effectués entre les électrodes.

3. Réservoir d'énergie électrochimique selon l'une quelconque des revendications précédentes, **caractérisé en ce que** le séparateur (1.2.2) est constitué d'une membrane en fibre de verre.

4. Réservoir d'énergie électrochimique selon l'une quelconque des revendications précédentes, **caractérisé en ce que** dans le séparateur (1.2.2) est disposé un électrolyte.

5. Réservoir d'énergie électrochimique selon l'une quelconque des revendications précédentes, **caractérisé en ce que** la matrice électroconductrice (2) comprend une structure de carbone mécaniquement souple et poreuse (K).

6. Réservoir d'énergie électrochimique selon l'une quelconque des revendications précédentes, **caractérisée en ce que** la structure de silicium (S) comprenant des structures en silicium tubulaires nanométriques.

7. Batterie, comprenant au moins un réservoir d'énergie électrochimique selon l'une des revendications 1 à 6.
